# FASCICULE DE BREVET EUROPEEN

(11) **EP 3 090 168 B1**
(45) Date de publication et mention de la délivrance du brevet: **14.02.2018**
(21) Numéro de dépôt: 14825372.7
(22) Date de dépôt: 22.10.2014
(51) Int. Cl.: F02M 26/00, F16K 1/20

(54) **ÉLÉMENT DE VANNE, NOTAMMENT POUR MOTEUR THERMIQUE**
VENTILELEMENT, INSBESONDERE FÜR EINE BRENNKRAFTMASCHINE
VALVE ELEMENT, IN PARTICULAR FOR COMBUSTION ENGINE

(30) Priorité: 31.10.2013 FR 1360719
(43) Date de publication de la demande: 09.11.2016
(73) Titulaire: Valeo Systèmes de Contrôle Moteur, 95800 Cergy Saint Christophe (FR)
(72) Inventeur: MARTIN, Nicolas, F-78600 Maisonslafitte (FR); HODEBOURG, Grégory, F-Sartrouville 78500 (FR); CRAVO, David, F-95520 Osny (FR)
(74) Mandataire: Garcia, Christine
(86) Numéro de dépôt international: PCT/FR2014/052689
(87) Numéro de publication internationale: WO 2015/063394

(56) Documents cités:
- EP-A2- 1 213 468
- DE-A1-102007 058 541
- DE-A1-102011 077 626
- US-A- 1 610 020
- US-A- 4 074 889
- US-A- 5 822 984

## Description

L'invention se rapporte à un élément de vanne notamment pour moteur thermique, et à une vanne réalisée à l'aide d'un tel élément de vanne.

L'invention s'applique notamment lorsque le moteur thermique est utilisé pour la propulsion d'un véhicule, par exemple d'un véhicule automobile. Il peut s'agir d'un moteur dont le carburant est de l'essence ou du diesel. La vanne peut être intégrée au circuit d'air du moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Dans le cas d'une vanne comprenant :
- un corps dans lequel est ménagé un conduit apte à être parcouru par un fluide, et
- un volet monté pivotant dans le conduit entre une position ouverte et une position fermée dans lequel il obture le conduit,
des problèmes de fuite de la vanne lorsque le volet est en position fermée existent.

Pour y remédier, il est connu d'utiliser un joint interposé entre le corps et le volet lorsque ce dernier est dans la position fermée. Néanmoins, un tel joint est susceptible de se dilater du fait des fortes températures pouvant être atteintes dans l'environnement dans lequel il se trouve.

La présente invention vise notamment à remédier à cet inconvénient avec un élément de vanne selon la revendication 1.

DE102007058541 A1 divulgue un élément de vanne dans lequel la position du volet dans le conduit peut être ajustée lors de la fabrication de l'élément de vanne.

L'invention permet d'ajuster la position du volet dans le conduit lors de la fabrication de l'élément de vanne. Cet ajustement de la position du volet permet d'optimiser la distance entre le volet et le corps, lorsque le volet est en position fermée et de réduire ainsi les fuites de la vanne incorporant l'élément de vanne selon l'invention lorsque le volet est en position fermée.

Le support peut s'étendre le long d'au moins une portion de l'arbre.

Le volet peut être monté pivotant dans le conduit entre une position ouverte et une position fermée dans lequel il obture le conduit.

De préférence, le volet n'est pas directement en contact avec le corps lorsqu'il est en position ouverte.

La position fermée, dans laquelle le volet obture le conduit, et la position ouverte peuvent chacune être des positions extrêmes pour le pivotement du volet. Autrement dit, le pivotement du volet entre la position ouverte et la position fermée définit l'amplitude maximale du pivotement du volet.

Les formes relatives desdites portions peuvent être configurées de manière à permettre un déplacement en translation du support par rapport au conduit.

Un tel déplacement en translation est particulièrement adapté pour permettre d'ajuster la distance entre le volet le corps, lorsque le volet est en position fermée dans la vanne.

Dans un premier exemple, la portion du support peut définir une cavité dans laquelle est reçue la portion de l'arbre, lesdites formes relatives permettant l'existence d'un jeu pour ledit déplacement.

Une telle cavité permet de recevoir la portion de l'arbre et ainsi un positionnement relatif du support par rapport à l'arbre, donc par rapport au conduit.

Le jeu peut être positif, la dimension de la cavité étant plus grande que la dimension correspondante de la portion de l'arbre reçue dans la cavité.

En variante, le jeu peut être négatif, la dimension de la cavité étant plus petite que la dimension correspondante de la portion de l'arbre reçue dans la cavité correspondante.

Un tel jeu négatif permet en outre de réaliser un serrage de la portion de l'arbre dans la portion du support.

La portion de l'arbre peut comporter à une extrémité, une zone amincie destinée à venir guider la portion dans la cavité. Cette zone amincie permet de guider la portion de l'arbre à son entrée dans la cavité.

La cavité peut s'étendre selon un axe de déplacement et cet axe peut définir la direction pour ledit déplacement.

La longueur de la cavité mesurée selon l'axe de déplacement peut être supérieure à la dimension de la portion de l'arbre mesurée selon ledit axe.

Ainsi, le support peut être déplacé relativement à l'arbre et à l'issue du déplacement, la portion de l'arbre peut être intégralement comprise dans la cavité, ce qui permet d'assurer un bon couplage entre le support et l'arbre.

La longueur de la cavité mesurée selon l'axe de déplacement et la dimension de la portion de l'arbre mesurée selon ledit axe peuvent être agencées pour permettre de définir deux positions extrêmes du support par rapport au conduit, la distance entre ces deux positions extrêmes étant au moins égale à 0,6 mm.

En variante, la longueur de la cavité mesurée selon l'axe de déplacement peut être strictement inférieure à la dimension de la portion de l'arbre mesurée selon ledit axe.

La cavité peut comporter une ouverture agencée pour permettre l'insertion de la portion de l'arbre à l'intérieur de celle-ci, cette ouverture étant notamment disposée à l'extrémité de la cavité opposée au volet.

La cavité peut être formée par deux parois planes opposées et parallèles à l'axe de déplacement, et la portion de l'arbre peut présenter deux méplats, chaque méplat étant disposé en regard d'une des parois planes, et étant parallèle à cette dernière.

Dans un deuxième exemple, au moins une portion de l'arbre peut définir une cavité dans laquelle est reçue la portion du support, lesdites formes relatives permettant l'existence d'un jeu pour ledit déplacement.

Cette configuration permet d'assurer un bon maintien de la portion du support par l'arbre tout en permettant un l'utilisation d'un volet simplifié.

Le jeu peut être positif, la dimension de la cavité étant plus grande que la dimension correspondante de la portion du support reçue dans la cavité.

En variante, le jeu peut être négatif, la dimension de la cavité étant plus petite que la dimension correspondante de la portion du support reçue dans la cavité.

La portion du support peut comporter à son extrémité, une zone amincie destinée permettre son guidage lors de son entrée dans la cavité.

La cavité peut s'étendre selon un axe de déplacement et cet axe peut définir la direction pour ledit déplacement.

La longueur de la cavité mesurée selon l'axe de déplacement peut être inférieure à la dimension de la portion du support mesurée selon ledit axe. Autrement dit, dans au moins une position du support relativement à la cavité, seulement une portion de la longueur de la portion du support peut venir en vis-à-vis de la longueur totale de la cavité, les différentes longueurs étant mesurées selon l'axe de déplacement.

En variante, la longueur de la cavité mesurée selon l'axe de déplacement peut être supérieure à la dimension de la portion du support mesurée selon ledit axe.

La cavité peut comporter au moins une ouverture agencée pour permettre l'insertion de la portion du support à l'intérieur de celle-ci.

La cavité peut comporter deux ouvertures opposées, alignées selon l'axe de déplacement.

La cavité peut être formée par deux parois planes opposées et la portion du support peut présenter deux méplats, chaque méplat étant disposé en regard d'une des parois planes et parallèle à cette dernière.

Chaque méplat peut être réalisé par une paroi plane de la portion du support.

Dans un troisième exemple, au moins une portion de l'arbre peut définir une surface contre laquelle vient une portion du support, lesdites formes relatives permettant le déplacement du support par rapport à l'arbre.

La portion de l'arbre peut comporter un méplat formant la surface contre laquelle vient la portion du support.

Dans tous les exemples précédents, le support et le volet peuvent être une seule et même pièce. En variante, le support et le volet peuvent être rigidement couplés.

Dans tous les exemples précédents, l'élément de vanne peut comprendre une pluralité de supports écartés le long de l'axe de pivotement.

Dans tous les exemples précédents, le support ou l'arbre peut comporter une butée d'arrêt du déplacement de l'un par rapport à l'autre.

Dans tous les exemples précédents, le volet peut comprendre :
- une première partie ayant une première surface dont une portion définit une première zone de contact avec le corps lorsque le volet est en position fermée,
- une deuxième partie ayant une deuxième surface dont une portion définit une deuxième zone de contact avec le corps lorsque le volet est en position fermée,
la première zone et la deuxième zone appartenant à des surfaces opposées du volet et étant coplanaires selon un plan ne coupant pas l'arbre.

Dans tous les exemples précédents, le corps peut être réalisé, au moins au niveau du volet, en au moins deux éléments en contact l'un avec l'autre selon le plan de joint du corps.

Lorsque le volet est en position fermée, chaque zone de contact du volet peut établir un contact linéique avec le plan de joint du corps.

En variante, lorsque le volet est en position fermée, chaque zone de contact du volet peut établir un contact plan sur plan avec le plan de joint du corps.

L'invention a encore pour objet une vanne, notamment pour moteur thermique, comprenant :
- un élément de vanne tel que décrit précédemment, et
- un moyen de couplage rigide du support et de l'arbre.

Grâce à l'invention, la position du volet peut être facilement ajustée pour que les fuites au niveau du volet, lorsque le volet est en position fermée, soient calibrées malgré les incertitudes sur les dimensions des pièces constituant les éléments de la vanne.

Le volet présente une position fermée dans laquelle une de ses faces vient au contact d'un plan de joint du corps pour obturer tout ou partie du conduit, et le support peut s'étendre perpendiculairement à cette face.

Le plan de joint du corps est la surface du corps contre laquelle le volet vient se positionner lorsque celui-ci est en position fermée. La direction perpendiculaire permet de déplacer le volet perpendiculairement au plan de joint du corps, lorsque le volet est en position fermée sans pour autant déplacer le volet à l'intérieur d'un plan parallèle au plan de joint du corps, ce dernier déplacement pouvant augmenter les fuites sur tout ou partie du pourtour du volet. Un tel déplacement du volet à l'intérieur le volet à l'intérieur d'un plan parallèle au plan de joint du corps peut modifier la forme de la courbe du débit en fonction de l'angle d'ouverture volet et ainsi diminuer les performances de l'élément de vanne.

L'élément de vanne peut être tel que décrit précédemment et l'axe de déplacement peut être perpendiculaire à ladite face du volet.

La vanne peut être une vanne dite « deux voies ».

En variante, la vanne peut être une vanne dite « trois voies ».

L'invention a encore pour objet un procédé de réglage de la position d'un volet d'une vanne par rapport à un conduit de ladite vanne selon la revendication 11.

La position prédéfinie peut correspondre à un taux de fuites prédéfini de la vanne quand le volet est en position fermée.

Le corps présente au moins un plan de joint destiné à venir en contact avec une face plane du volet lorsque le volet est en position fermée, et la position prédéfinie peut être une position dans laquelle le volet vient par ladite face en contact plan sur plan avec une face plane d'un outil de réglage de l'élément de vanne lorsque cet outil de réglage est disposé dans le conduit de manière :
- à venir en contact avec le plan de joint du corps, et
- à ce que ladite face de l'outil de réglage soit à une distance de l'arbre inférieure à la distance entre l'arbre que le plan de joint.

Le contact entre le plan de joint du corps et la face plane du volet peut être un contact linéique.

En variante, le contact entre le plan de joint du corps et la face plane du volet peut être un contact ponctuel.

La distance entre le plan de joint du corps et ladite face de l'outil de réglage peut est comprise entre 0 et 0,5 mm, notamment entre 0 et 0,1 mm.

L'invention pourra être mieux comprise à la lecture de la description détaillée qui va suivre, d'exemples de mise en oeuvre non limitatifs de l'invention, et à l'examen du dessin annexé, sur lequel :
- La figure 1 représente, de manière schématique et partielle, une vanne selon un premier exemple de réalisation de l'élément de vanne selon l'invention,
- La figure 2 représente, de manière schématique et partielle, une vanne selon un deuxième exemple de réalisation de l'élément de vanne selon l'invention,
- La figure 3 représente, de manière schématique et partielle, une vanne selon un troisième exemple de réalisation de l'élément de vanne selon l'invention,
- La figure 4 représente, de manière schématique et partielle, un élément de vanne et un outil de réglage dans une étape du procédé selon l'invention, et
- La figure 5 représente, de manière schématique et partielle, la vanne réalisée à partir de l'élément de vanne de la figure 4.

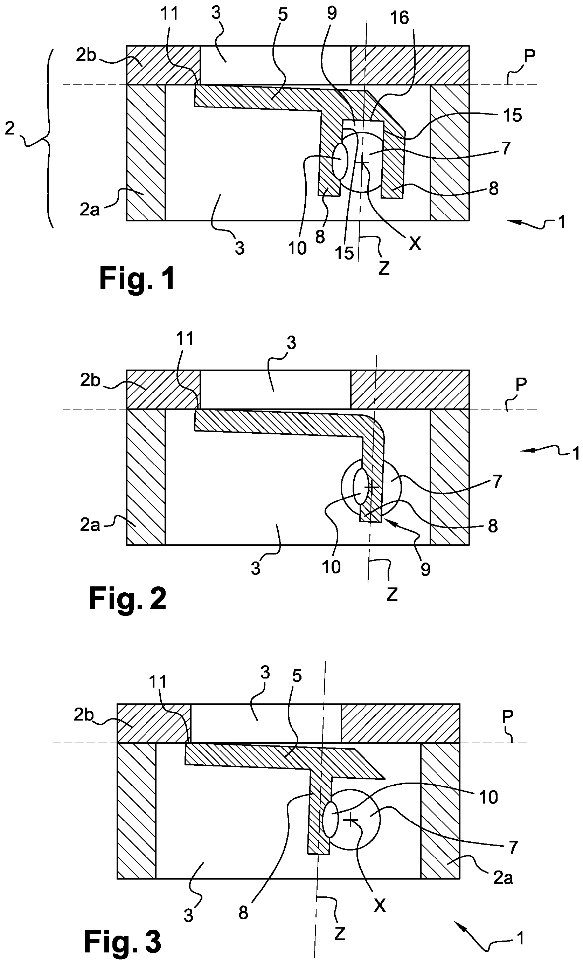

On a représenté sur la figure 1 une vanne 1 couverte par l'invention. Sur cette figure, la vanne 1 est une vanne dite « deux voies » mais l'invention n'y est pas limitée.

La vanne 1 qui va être décrite est une vanne utilisée dans un circuit d'air d'un moteur thermique, par exemple utilisé pour propulser un véhicule automobile.

La vanne 1 est réalisée à l'aide d'un élément de vanne 21 comportant :
- un corps 2 dans lequel est ménagé un conduit 3 apte à être parcouru par un fluide,
- un volet 5 monté pivotant dans le conduit 3 par un arbre 7 s'étendant selon un axe de pivotement X, et
- un support 8 rigidement couplé au volet 5.

L'arbre 7 est monté dans des paliers non représentés.

Dans l'exemple considéré, le support 8 et le volet 5 sont formés d'une seule et même pièce. Les paliers sont rigidement couplés au corps 2.

Le corps 2a, 2b est par exemple réalisé en aluminium, en acier, en plastique ou en inox. Un conduit 3 est ménagé dans le corps 2. Il s'agit par exemple d'un conduit d'admission, d'échappement ou d'un conduit formant une boucle de recirculation des gaz d'échappement (encore appelée boucle EGR), cette boucle pouvant être une boucle haute pression ou basse pression. Le corps 2 de la vanne est réalisé par l'assemblage de deux pièces 2a et 2b, ces deux pièces venant au contact l'une de l'autre selon un plan de joint P du corps.

Le volet 5 présente une position fermée dans laquelle la face 11 vient au contact du plan de joint du corps P pour obturer le conduit 3.

Le support 8 peut s'étendre comme représenté, perpendiculairement à la face 11 du volet 5.

Dans l'exemple représenté, le support 8 a une section sensiblement en forme de 'U', dans un plan orthogonal à l'axe de pivotement X, et forme ainsi une cavité 9 dans laquelle est reçu l'arbre 7.

La cavité 9 comprend dans cet exemple, deux parois planes 15 parallèles à l'axe Z et s'étendant chacune depuis une extrémité borgne 16 de la cavité 9.

La portion de l'arbre 7 comporte deux méplats formant les faces planes et venant chacun en vis-à-vis des parois planes 15 de la cavité 9.

Les deux méplats sont formés sur une longueur égale à celle du support, la longueur étant mesurée le long de l'axe de pivotement X de l'arbre 7.

La distance entre les deux parois planes 15 de la cavité 9 est supérieure à la distance entre les deux méplats de l'arbre 7. Ainsi, un jeu positif existe entre la cavité 9 et l'arbre 7 de sorte qu'un déplacement en translation de l'arbre 7 par rapport au support 8 est possible dans l'élément de vanne 21 selon l'axe Z de la cavité, qui définit ainsi un axe Z de déplacement pour le volet 5 par rapport au conduit 3.

Le support 8 et l'arbre 7 sont ainsi configurés pour permettre un déplacement en translation du support 8 par rapport au conduit 3 dans une direction Z perpendiculaire à la face 11 du volet 5, cette direction Z étant différente et ici orthogonale à l'axe de pivotement X du volet 5.

La longueur de la cavité mesurée le long de l'axe Z est, dans l'exemple décrit, supérieure à la dimension de l'arbre mesurée le long de l'axe Z. L'arbre 7 peut ainsi être contenu intégralement dans la cavité 9.

On a représenté sur la figure 2 une vanne 1 selon un autre exemple dans lequel :
- une portion de l'arbre 7 comporte une cavité 9, et
- le support 8 a une section sensiblement en forme de rectangle, dans un plan orthogonal à l'axe de pivotement X et s'étendant perpendiculairement à la face 11 du volet 5, en formant ainsi une plaque venant se loger dans la cavité 9 de l'arbre 7.

La cavité 9 comporte deux parois internes planes en vis-à-vis et chaque paroi plane est équidistante du plan parallèle à celles-ci, ledit plan passant par l'axe de pivotement X. La cavité comporte deux ouvertures diamétralement opposées.

Dans l'exemple représenté, le volet 5 et le support 8 forment une seule pièce.

La distance entre les deux parois internes de la cavité 9 est supérieure à la distance entre les deux parois externes du support 8 venant en vis-à-vis de la cavité lorsque le support 8 est inséré dans la cavité 9.

La longueur de la cavité mesurée le long de l'axe Z est inférieure à la dimension du support 8 mesurée le long de l'axe Z. Le support 8 peut ainsi être traversant vis-à-vis de la cavité.

On a représenté sur la figure 3 un autre exemple de vanne 1 dans lequel :
- une portion de l'arbre 7 comporte un méplat 9, et
- le support 8 a une section sensiblement en forme de rectangle, dans un plan orthogonal à l'axe de pivotement X et s'étendant perpendiculairement à la face 11 du volet 5, en formant ainsi une plaque dont une face vient en contact avec le méplat 9 de l'arbre 7.

La longueur du méplat 9 mesurée le long de l'axe de déplacement Z est inférieure à la dimension du support 8 mesurée le long de l'axe Z. Le support 8 peut être ainsi intégralement au contact du méplat 9.

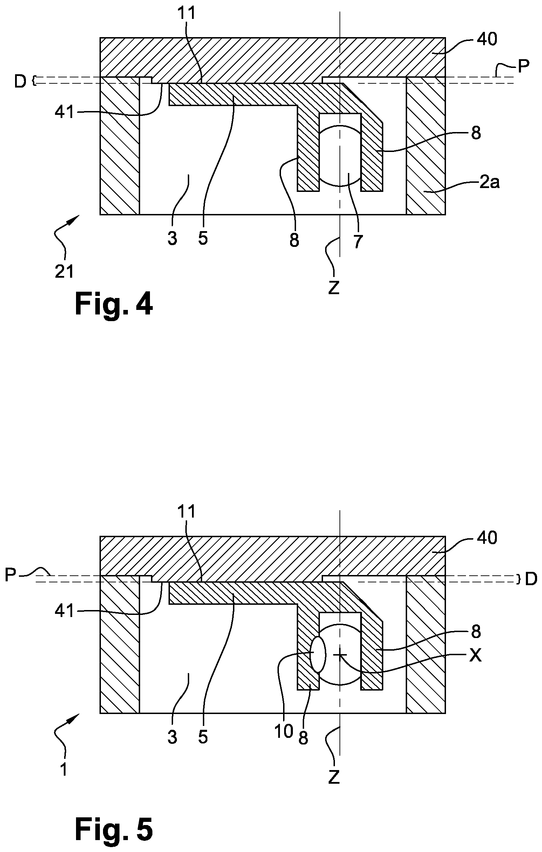

On a représenté sur la figure 4 un élément de vanne 21 à une étape d'un procédé de réglage de la position fermée du volet 5 de la vanne 1 par rapport au conduit 3. Dans l'exemple de la figure 4, l'élément de vanne 21 est tel que décrit en référence à la figure 1.

Dans l'exemple décrit à la figure 4, l'élément de vanne 21 ne comprend pas la pièce 2b du corps 2. En effet, cette pièce est, lors de cette étape, remplacée par un outil de réglage 40.

L'outil de réglage 40, par exemple une pièce en aluminium, est mis en contact plan sur plan avec la pièce 2a du corps 2 selon le plan de joint P du corps de l'élément de vanne 21.

L'outil de réglage 40 présente une face plane 41 qui vient en saillie dans le conduit 3, la distance entre la face plane 41 et l'arbre 7 étant inférieure à la distance entre l'arbre 7 et le plan de joint P du corps 2.

Le volet 5 est ici en position fermée et vient en contact plan sur plan avec la face plane 41 de l'outil de réglage 40.

Pour venir en contact plan sur plan avec la face 41, le support 8 est déplacé par rapport au conduit 3 grâce aux formes relatives entre la portion du support 8 et la portion de l'arbre 7 décrites ci-dessus.

La figure 5 représente la vanne 1 obtenue à partir de l'élément de vanne 21 de la figure 4, une fois le support 8 couplé rigidement à l'arbre 7.Ce couplage rigide est dans l'exemple considéré réalisé par une soudure laser 10 de la portion de l'arbre 7 dans la cavité 9 du support 8.

Bien entendu, l'invention n'est pas limitée à l'exemple de mise en oeuvre qui vient d'être décrit, mais par les revendications.

## Revendications

1. Élément de vanne (21), comprenant :
- un corps (2) dans lequel est ménagé un conduit (3) apte à être parcouru par un fluide,
- un volet (5) monté pivotant dans le conduit (3) par un arbre (7) s'étendant selon un axe de pivotement (X), le volet (5) présentant une position fermée dans laquelle une face (11) vient au contact du plan de joint (P) du corps (2) pour obturer le conduit (3), et
- au moins un support (8) rigidement couplé au volet (5), et présentant au moins une portion destinée à être rigidement couplée à une portion de l'arbre (7),
ladite portion du support (8) et ladite portion de l'arbre (7) présentant des formes relatives permettant un déplacement du support (8) par rapport au conduit (3) autrement que dans la direction de l'axe de pivotement (X),
une portion de l'arbre (7) définissant une surface plane, contre laquelle vient une portion du support (8), lesdites formes relatives permettant le déplacement du support (8) par rapport à l'arbre (7),
le support (8) et l'arbre (7) étant configurés pour permettre un déplacement en translation du support (8) par rapport au conduit (3) dans une direction (Z) perpendiculaire à la face (11) du volet (5), cette direction (Z) étant différente et orthogonale à l'axe de pivotement (X) du volet (5).

2. Élément selon la revendication 1, la portion du support (8) définissant une cavité (9) dans laquelle est reçue la portion de l'arbre (7), lesdites formes relatives permettant l'existence d'un jeu pour ledit déplacement.

3. Élément selon la revendication 2, la cavité (9) s'étendant selon un axe de déplacement (Z) et cet axe (Z) définissant la direction pour ledit déplacement.

4. Élément selon la revendication 3, la longueur de la cavité mesurée selon l'axe de déplacement (Z) étant supérieure à la dimension de la portion de l'arbre mesurée selon l'axe (Z).

5. Élément selon l'une quelconque des revendications 2 à 4, la cavité (9) comportant une ouverture agencée pour permettre l'insertion de la portion de l'arbre (7) à l'intérieur de celle-ci, cette ouverture étant notamment disposée à l'extrémité de la cavité (9) opposée au volet (5).

6. Élément selon l'une quelconque des revendications 2 à 5, la cavité (9) étant formée par deux parois planes (15) opposées et parallèles à l'axe de déplacement (Z) et la portion de l'arbre (7) présentant deux méplats, chaque méplat étant disposé en regard d'une des parois planes (15) et étant parallèle à cette dernière.

7. Élément selon l'une quelconque des revendications précédentes, le support (8) et le volet (5) étant une seule et même pièce.

8. Élément selon l'une quelconque des revendications précédentes, comprenant une pluralité de supports (8) écartés le long de l'axe de pivotement (X).

9. Vanne (1), notamment pour moteur thermique, comprenant :
- un élément de vanne (21) selon l'une quelconque des revendications précédentes, et
- un moyen de couplage rigide (10) du support (8) et de l'arbre (7).

10. Vanne (1) selon la revendication 9, le volet (5) présentant une position fermée dans laquelle une de ses faces (11) vient au contact d'un plan de joint du corps (P) pour obturer tout ou partie du conduit (3), et le support (8) s'étendant perpendiculairement à cette face (11).

11. Procédé de réglage de la position d'un volet (5) d'une vanne (1) par rapport à un conduit (3) de ladite vanne (1), procédé dans lequel :
- on dispose d'un élément de vanne (21) comprenant :
- un corps (2) dans lequel est ménagé un conduit (3) apte à être parcouru par un fluide,
- un volet (5) monté pivotant dans le conduit (3) par un arbre (7) s'étendant selon un axe de pivotement (X), le volet (5) présentant une position fermée dans laquelle une face (11) vient au contact du plan de joint (P) du corps (2) pour obturer le conduit (3), et
- au moins un support (8) rigidement couplé au volet (5), et présentant au moins une portion destinée à être rigidement couplée à une portion de l'arbre (7),
ladite portion de l'arbre (7) définissant une surface plane contre laquelle vient la dite portion du support (8), ladite portion du support (8) et ladite portion de l'arbre (7) présentant des formes relatives permettant un déplacement du support (8) par rapport au conduit (3) autrement que dans la direction de l'axe de pivotement (X),
- on déplace le support (8) par rapport au conduit (3) de manière à ce que le support (8) occupe une position prédéfinie, le support (8) et l'arbre (7) étant configurés pour permettre un déplacement en translation du support (8) par rapport au conduit (3) dans une direction (Z) perpendiculaire à la face (11) du volet (5), cette direction (Z) étant différente et orthogonale à l'axe de pivotement (X) du volet (5) et
- on couple rigidement le support (8) et l'arbre (7) lorsque la position prédéfinie est obtenue.

12. Procédé selon la revendication 11, dans lequel le corps (2) présente au moins un plan de joint (P) destiné à venir en contact avec une face (11) plane du volet (5) lorsque le volet (5) est en position fermée, et dans lequel la position prédéfinie est une position dans laquelle le volet (5) vient par ladite face (11) en contact plan sur plan avec une face plane (41) d'un outil de réglage (40), de l'élément de vanne (21) lorsque cet outil de réglage (40) est disposé dans le conduit (3) de manière :
- à venir en contact avec le plan de joint (P) du corps (2), et
- à ce que ladite face (41) de l'outil de réglage (40) soit à une distance de l'arbre (7) inférieure à la distance entre l'arbre (7) et le plan de joint (P).

13. Procédé selon la revendication 12, dans lequel la distance (D) entre le plan de joint (P) du corps et ladite face (41) de l'outil de réglage (40) est comprise entre 0 et 0,5 mm, notamment entre 0 et 0,1 mm.

## Patentansprüche

1. Ventilelement (21), umfassend:
- einen Körper (2), in welchem ein Kanal (3) ausgebildet ist, der geeignet ist, von einem Fluid durchströmt zu werden,
- eine Klappe (5), die über eine sich entlang einer Schwenkachse (X) erstreckende Welle (7) schwenkbar in dem Kanal (3) angebracht ist, wobei die Klappe (5) eine geschlossene Position aufweist, in welcher eine Seite (11) mit der Trennebene (P) des Körpers (2) in Kontakt kommt, um den Kanal (3) zu verschließen, und
- wenigstens eine Stütze (8), die starr mit der Klappe (5) gekoppelt ist und wenigstens einen Abschnitt aufweist, der dazu bestimmt ist, starr mit einem Abschnitt der Welle (7) gekoppelt werden,
wobei der Abschnitt der Stütze (8) und der Abschnitt der Welle (7) jeweilige Formen aufweisen, die eine Verschiebung der Stütze (8) bezüglich des Kanals (3) auf andere Weise als in der Richtung der Schwenkachse (X) ermöglichen, wobei ein Abschnitt der Welle (7) eine ebene Fläche definiert, an welcher ein Abschnitt der Stütze (8) zur Anlage kommt, wobei die jeweiligen Formen die Verschiebung der Stütze (8) bezüglich der Welle (7) ermöglichen,
wobei die Stütze (8) und die Welle (7) dafür ausgebildet sind, eine Translationsverschiebung der Stütze (8) bezüglich des Kanals (3) in einer Richtung (Z) zu ermöglichen, die zu der Seite (11) der Klappe (5) senkrecht ist, wobei diese Richtung (Z) von der Schwenkachse (X) der Klappe (5) verschieden und zu dieser orthogonal ist.

2. Element nach Anspruch 1, wobei der Abschnitt der Stütze (8) einen Hohlraum (9) definiert, in welchem der Abschnitt der Welle (7) aufgenommen ist, wobei die jeweiligen Formen das Vorhandensein eines Spiels für die Verschiebung ermöglichen.

3. Element nach Anspruch 2, wobei sich der Hohlraum (9) entlang einer Verschiebungsachse (Z) erstreckt und diese Achse (Z) die Richtung für die Verschiebung definiert.

4. Element nach Anspruch 3, wobei die entlang der Verschiebungsachse (Z) gemessene Länge des Hohlraums größer als die entlang der Achse (Z) gemessene Abmessung des Abschnitts der Welle ist.

5. Element nach einem der Ansprüche 2 bis 4, wobei der Hohlraum (9) eine Öffnung aufweist, die dafür ausgebildet ist, das Einsetzen des Abschnitts der Welle (7) ins Innere derselben zu ermöglichen, wobei diese Öffnung insbesondere an dem der Klappe (5) gegenüberliegenden Ende des Hohlraums (9) angeordnet ist.

6. Element nach einem der Ansprüche 2 bis 5, wobei der Hohlraum (9) von zwei gegenüberliegenden und zu der Verschiebungsachse (Z) parallelen ebenen Wänden (15) gebildet wird und der Abschnitt der Welle (7) zwei Abflachungen aufweist, wobei jede Abflachung gegenüber einer der ebenen Wände (15) angeordnet ist und zu dieser Letzteren parallel ist.

7. Element nach einem der vorhergehenden Ansprüche, wobei die Stütze (8) und die Klappe (5) ein und dasselbe Teil sind.

8. Element nach einem der vorhergehenden Ansprüche, welches mehrere Stützen (8) umfasst, die entlang der Schwenkachse (X) beabstandet sind.

9. Ventil (1), insbesondere für eine Brennkraftmaschine, umfassend:
- ein Ventilelement (21) nach einem der vorhergehenden Ansprüche, und
- ein Mittel zur starren Kopplung (10) der Stütze (8) und der Welle (7).

10. Ventil (1) nach Anspruch 9, wobei die Klappe (5) eine geschlossene Position aufweist, in welcher eine ihrer Seiten (11) mit einer Trennebene (P) des Körpers in Kontakt kommt, um den Kanal (3) ganz oder teilweise zu verschließen, und wobei sich die Stütze (8) senkrecht zu dieser Seite (11) erstreckt.

11. Verfahren zum Einstellen der Position einer Klappe (5) eines Ventils (1) bezüglich eines Kanals (3) des Ventils (1), wobei bei diesem Verfahren:
- ein Ventilelement (21) bereitgestellt wird, welches umfasst:
- einen Körper (2), in welchem ein Kanal (3) ausgebildet ist, der geeignet ist, von einem Fluid durchströmt zu werden,
- eine Klappe (5), die über eine sich entlang einer Schwenkachse (X) erstreckende Welle (7) schwenkbar in dem Kanal (3) angebracht ist, wobei die Klappe (5) eine geschlossene Position aufweist, in welcher eine Seite (11) mit der Trennebene (P) des Körpers (2) in Kontakt kommt, um den Kanal (3) zu verschließen, und
- wenigstens eine Stütze (8), die starr mit der Klappe (5) gekoppelt ist und wenigstens einen Abschnitt aufweist, der dazu bestimmt ist, starr mit einem Abschnitt der Welle (7) gekoppelt werden,
wobei der Abschnitt der Welle (7) eine ebene Fläche definiert, an welcher der Abschnitt der Stütze (8) zur Anlage kommt,
wobei der Abschnitt der Stütze (8) und der Abschnitt der Welle (7) jeweilige Formen aufweisen, die eine Verschiebung der Stütze (8) bezüglich des Kanals (3) auf andere Weise als in der Richtung der Schwenkachse (X) ermöglichen,
- die Stütze (8) bezüglich des Kanals (3) derart verschoben wird, dass die Stütze (8) eine vordefinierte Position einnimmt, wobei die Stütze (8) und die Welle (7) dafür ausgebildet sind, eine Translationsverschiebung der Stütze (8) bezüglich des Kanals (3) in einer Richtung (Z) zu ermöglichen, die zu der Seite (11) der Klappe (5) senkrecht ist, wobei diese Richtung (Z) von der Schwenkachse (X) der Klappe (5) verschieden und zu dieser orthogonal ist, und
- die Stütze (8) und die Welle (7) starr gekoppelt werden, wenn die vordefinierte Position erreicht ist.

12. Verfahren nach Anspruch 11, wobei der Körper (2) wenigstens eine Trennebene (P) aufweist, die dazu bestimmt ist, mit einer ebenen Seite (11) der Klappe (5) in Kontakt zu kommen, wenn sich die Klappe (5) in einer geschlossenen Position befindet, und wobei die vordefinierte Position eine Position ist, in welcher die Klappe (5) über die Seite (11) in Anlagekontakt mit einer ebenen Seite (41) eines Werkzeugs (40) zur Einstellung des Ventilelements (21) kommt, wenn dieses Einstellwerkzeug (40) in dem Kanal (3) derart angeordnet ist:
- dass es mit der Trennebene (P) des Körpers (2) in Kontakt kommt, und
- dass sich die Seite (41) des Einstellwerkzeugs (40) in einem Abstand von der Welle (7) befindet, der kleiner als der Abstand zwischen der Welle (7) und der Trennebene (P) ist.

13. Verfahren nach Anspruch 12, wobei de Abstand (D) zwischen der Trennebene (P) des Körpers und der Seite (41) des Einstellwerkzeugs (40) zwischen 0 und 0,5 mm, insbesondere zwischen 0 und 0,1 mm liegt.

## Claims

1. Valve element (21), comprising:
- a body (2) in which there is formed a duct (3) through which a fluid is able to flow,
- a shutter (5) mounted pivotably in the duct (3) by way of a shaft (7) extending along a pivot axis (X), the shutter (5) having a closed position in which a face (11) comes into contact with the parting line (P) of the body (2) to shut off the duct (3), and
- at least one support (8) rigidly coupled to the shutter (5), and having at least one portion intended to be rigidly coupled to a portion of the shaft (7),
said portion of the support (8) and said portion of the shaft (7) having relative shapes allowing the support (8) to move with respect to the duct (3) in some other way than in the direction of the pivot axis (X),
a portion of the shaft (7) defining a planar surface, against which a portion of the support (8) comes, said relative shapes allowing the support (8) to move with respect to the shaft (7), the support (8) and the shaft (7) being configured to allow a translational movement of the support (8) with respect to the duct (3) in a direction (Z) perpendicular to the face (11) of the shutter (5), this direction (Z) being different from and orthogonal to the pivot axis (X) of the shutter (5) .

2. Element according to Claim 1, the portion of the support (8) defining a cavity (9) in which the portion of the shaft (7) is received, said relative shapes allowing the existence of a clearance for said movement.

3. Element according to Claim 2, the cavity (9) extending along a movement axis (Z) and this axis (Z) defining the direction for said movement.

4. Element according to Claim 3, the length of the cavity measured along the movement axis (Z) being greater than the dimension of the portion of the shaft measured along the axis (Z).

5. Element according to any one of Claims 2 to 4, the cavity (9) comprising an opening arranged to allow the insertion of the portion of the shaft (7) inside it, this opening being in particular arranged at the end of the cavity (9) opposite to the shutter (5).

6. Element according to any one of Claims 2 to 5, the cavity (9) being formed by two opposite planar walls (15) parallel to the movement axis (Z) and the portion of the shaft (7) having two flats, each flat being arranged facing one of the planar walls (15) and being parallel thereto.

7. Element according to any one of the preceding claims, the support (8) and the shutter (5) being one and the same part.

8. Element according to any one of the preceding claims, comprising a plurality of supports (8) spaced apart along the pivot axis (X).

9. Valve (1), in particular for a combustion engine, comprising:
- a valve element (21) according to any one of the preceding claims, and
- a means (10) for rigidly coupling the support (8) and the shaft (7).

10. Valve (1) according to Claim 9, the shutter (5) having a closed position in which one of its faces (11) comes into contact with a parting line of the body (P) to shut off all or part of the duct (3), and the support (8) extending perpendicularly to this face (11).

11. Method for adjusting the position of a shutter (5) of a valve (1) with respect to a duct (3) of said valve (1), in which method:
- there is provided a valve element (21) comprising:
- a body (2) in which there is formed a duct (3) through which a fluid is able to flow,
- a shutter (5) mounted pivotably in the duct (3) by way of a shaft (7) extending along a pivot axis (X), the shutter (5) having a closed position in which a face (11) comes into contact with the parting line (P) of the body (2) to shut off the duct (3), and
- at least one support (8) rigidly coupled to the shutter (5), and having at least one portion intended to be rigidly coupled to a portion of the shaft (7),
said portion of the shaft (7) defining a planar surface against which said portion of the support (8) comes,
said portion of the support (8) and said portion of the shaft (7) having relative shapes allowing the support (8) to move with respect to the duct (3) in some other way than in the direction of the pivot axis (X),
- the support (8) is moved with respect to the duct (3) in such a way that the support (8) occupies a predefined position, the support (8) and the shaft (7) being configured to allow a translational movement of the support (8) with respect to the duct (3) in a direction (Z) perpendicular to the face (11) of the shutter (5), this direction (Z) being different from and orthogonal to the pivot axis (X) of the shutter (5), and
- the support (8) and the shaft (7) are rigidly coupled when the predefined position is obtained.

12. Method according to Claim 11, in which the body (2) has at least one parting line (P) intended to come into contact with a planar face (11) of the shutter (5) when the shutter (5) is in the closed position, and in which the predefined position is a position in which the shutter (5) comes by way of said face (11) into flat-on-flat contact with a planar face (41) of a tool (40) for adjusting the valve element (21) when this adjusting tool (40) is arranged in the duct (3) so as:
- to come into contact with the parting line (P) of the body (2), and
- such that said face (41) of the adjusting tool (40) is at a distance from the shaft (7) that is less than the distance between the shaft (7) and the parting line (P).

13. Method according to Claim 12, in which the distance (D) between the parting line (P) of the body and said face (41) of the adjusting tool (40) is between 0 and 0.5 mm, in particular between 0 and 0.1 mm.
